(19) Europäisches Patentamt

European Patent Office

Office européen des brevets

(11) EP 1 302 867 A2

(12) EUROPEAN PATENT APPLICATION

(43) Date of publication:
16.04.2003 Bulletin 2003/16

(51) Int Cl.⁷: G06F 17/30

(21) Application number: 02023047.0

(22) Date of filing: 16.10.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 16.10.2001 US 978749

(71) Applicant: MICROSOFT CORPORATION
Redmond, Washington 98052-6399 (US)

(72) Inventors:
• Abel, Todd J.
  Redmond, Washington 98053 (US)
• Kothari, Nikhil
  Sammamish, Washington 98074 (US)

(74) Representative: Grünecker, Kinkeldey,
Stockmair & Schwanhäusser Anwaltssozietät
Maximilianstrasse 58
80538 München (DE)

(54) **Efficient web page localization**

(57) A Web page is localized based on a selected characteristic, such as a culture, a skin, a filtered set of functions, or other desired trait. Each instance of a control type in a Web page that is to be localized includes a configurable key attribute that refers to a localization element of one or more localized property values for the control type. During a rendering of the Web page, the localized property values corresponding to the control type and selected characteristic are automatically applied to each instance that includes the key. The property values are preferably obtained from a cached resource file that is generated from a data structure of localization elements stored in a database. A graphic user interface is provided for defining and managing localization elements in a database to generate resource files used for localizing a Web page.

FIG. 2

## Description

### Field of the Invention

The present invention generally relates to creating a Web page to reflect a local characteristic, and more specifically, to grouping multiple properties for controls on a Web page so that the Web page can automatically localize the controls based on a key attribute placed on the controls.

### Background of the Invention

Localization refers to customizing software for a particular characteristic or characteristics relevant to a user. Examples include customizing a user interface appearance with a skin having a particular design and/or color theme, limiting a set of controls available to a user as a function of the experience or needs of the user, providing specific controls or data to the user according to a business rule, providing culture based validation of data entered into a Web form, and other modifications that tailor the software to a specific user. Typically, localization refers to customizing software for a particular culture or society of a user. Culture is generally a combination of a user's preferred language and other characteristics that depend upon the user's geographic origin or location on the earth. Thus, localization often includes translating menus and messages into a language of the user, as well as changing a user interface in a software program to accommodate different alphabets, date and number formats, sensitivity to certain colors, and performing other customization appropriate for cultural and social characteristics of the user.

For Web-based applications, the two main techniques used for localization are static translation of each page, and dynamic translation. Static translation requires that a translator produce a customized version of a Web page for each locale in which the Web page will be accessed. Static translation is best used if a Web site has a small number of pages or the site has very fast or precise performance requirements. Of course, the most significant problem with static translation is that it increases manageability and maintenance costs of the Web pages served by a site.

With dynamic translation, a Web page is generated on the fly using cultural information about the locale from where the user has requested the Web page (barring caching optimization). Dynamic translation in this context is not necessarily limited to automatic translation of one language into another, but includes the ability to perform criteria-based insertions or substitutions of property values at runtime. When performing dynamic translation, a web page is generated when the user makes a request. Generating a Web page is sometimes referred to as rendering a Web page, although rendering a Web page may or may not include actually producing a graphical image on a display device. For example, when using ASP.NET, which renders HTML based on server controls, it is possible to effect HTML rendering by changing property values on the server controls. For purposes of this discussion, a control is defined as an object of data and/or code that provides an instance of a control type, such as a textbox for entering data through a Web page, a label on a button in a Web page, a developer-defined control type, etc.

During dynamic translation, HTML output is localized by changing properties on server controls based on predefined properties that are criteria-based. The localized property values for controls are usually stored in a data store, such as a database or file, and are sometimes referred to as resources in the data store. The values are set to localized property values that reflect the culture of the requesting user rather than set to baseline property values that reflect the culture of the Web application developer. Of course, this alternate insertion has an impact on the performance with which a Web page is rendered. However, dynamic translation improves manageability and decreases maintenance costs compared to static translation.

Currently, Web page developers often assign a number of keys to each control instance defined in a Web application, indicating that properties of the control instance should be rendered with localized values during dynamic translation. For example, a number of keys may be assigned to Web application code that will render a button control instance in a Web page. One key may indicate that a label of the button should be rendered with a label that is in a requesting user's language. Another key may indicate that the button should be rendered with a certain color that is considered desirable in the requesting user's culture. Multiple keys are also often used for other control instances, such as dropdown lists, graphic symbols, etc. Each key typically refers to a single property value stored in a database or in a file. Thus, a culture attribute, sent from the user to the server from which the Web page is requested, is combined with each key to obtain culturally appropriate values for each property of each control instance rendered into the Web page.

Including a key for each property of numerous control instances to be rendered within a Web page with a localized value requires significant programming time and effort. Establishing a database of corresponding property values for a large number of control types and cultures also requires a significant time and effort. Further, individually obtaining each property value from the database or file during dynamic translation slows response time for the Web page to be rendered for viewing by the user. To reduce the programming and processing required, it is desirable to group localization properties together and perform more of the localization process automatically.

## Summary of the Invention

The present invention is directed to a method for localizing a Web page based on a selected characteristic, such as a culture, a skin, a filtered set of functions, or other desired trait. The Web page includes instances of controls that are to be localized when the Web page is rendered by a browser program. Each control instance that is to be localized includes a configurable key as an attribute. Rather than the key simply referring to a single key-value pair, the key instead refers to a localization element for one or more localized property values associated with one or more types of controls. Including a reference to a localization element of one or more property values on each instance of a control, saves a substantial amount of programming that would otherwise be required to provide a large number of key-value pairs to localize a Web page.

During the rendering of the Web page, the appropriate localized property values associated with a selected characteristic are automatically applied to each control instance that is found to include the key. The property values are preferably obtained from a cached resource file, thereby improving access time. The cached resource file is preferably generated from a data structure of localization elements stored in a database. However, the property values may alternatively be obtained directly from the database or other storage.

Preferably, the property values are translations or other customized values based on the user's culture, role or other selected criteria. For example, if the selected characteristic is a specific culture, the property values can comprise words in that culture's language as labels for controls, or colors on the controls that are appropriate for that culture. In a more complex case, the property value could be words in that culture's specified language that comprise a list of states or provinces for a dropdown list control. Whether words in a specific language or some other property based on the selected characteristic, the customized property values are applied to instances of the control types, such as control buttons, labels, dropdown lists or other complex controls.

When an instance of a control is detected for a Web page, the instance of the control is interrogated to determine if it includes an attribute that identifies the key. The selected characteristic and the key are used by a resource manager to read the corresponding property value or values from a resource file. The properties associated with the control type of the instance of the control are assigned to the instance of the control, and the property values are then set to the values obtained from the resource file. This assignment and value setting is preferably performed by a Render method of a customized Page class. After this step is completed, a conventional or standard Render method is used to render the Web page into a markup language page, such as an HTML page.

Another aspect of the invention is directed to a data structure defining the localization elements. Preferably, localization elements are grouped together in a set according to a desired characteristic. Each localization element is identified by a unique element key and is associated with a hybrid dictionary of one or more control types. Each control type is associated with another hybrid dictionary of one or more properties and corresponding property values.

Other aspects of the invention are directed respectively to a method, a system, and a medium that stores instructions for managing localization elements in a database and for generating resource files. Preferably, a graphical user interface is employed to enable a designer, programmer, translator, operator, or other user to enter and manipulate the localization data with respect to one or more Web applications comprising Web pages. The user may also enter and manipulate the localization data with respect to characteristics that each application will support. In addition, the graphical user interface also enables the user to establish the element keys, control types, properties, and property values and to generate uncompiled resource files or compiled resource files with a specific format that accommodates the extended localization element data. The present invention is thus also directed to a resource writer and resource reader that write and read the resource files with this specific format.

## Brief Description of the Drawing Figures

The foregoing aspects and many of the attendant advantages of this invention will become more readily appreciated as the same becomes better understood by reference to the following detailed description, when taken in conjunction with the accompanying drawings, wherein:

FIGURE 1 is a block diagram of an exemplary system for implementing the present invention using a general purpose computing device in the form of a conventional server computer;
FIGURE 2 is a block diagram showing an architecture of a preferred embodiment of the present invention;
FIGURE 3 is a table illustrating a data structure of localization elements;
FIGURE 4 is an exemplary Web page that has been localized with the present invention for a client user within the French culture;
FIGURE 5 is a flow diagram illustrating logical steps for defining localization elements for a Web application;
FIGURE 6 is a flow diagram illustrating logical steps for creating a Web page that will be localized upon rendering;
FIGURE 7 is a flow diagram illustrating logical steps for customizing localization elements that reflect a chosen culture for a selected Web application;
FIGURE 8 is a flow diagram illustrating logical steps for deploying a Web application and its associated resource files after all pages of the Web application are coded and all localization elements are translated;
FIGURE 9 is a flow diagram illustrating overview logical steps for localizing and rendering a requested server page; and
FIGURE 10 is a flow diagram illustrating detailed logical steps for localizing a server page.

**Description of a Preferred Embodiment**

Exemplary Operating Environment

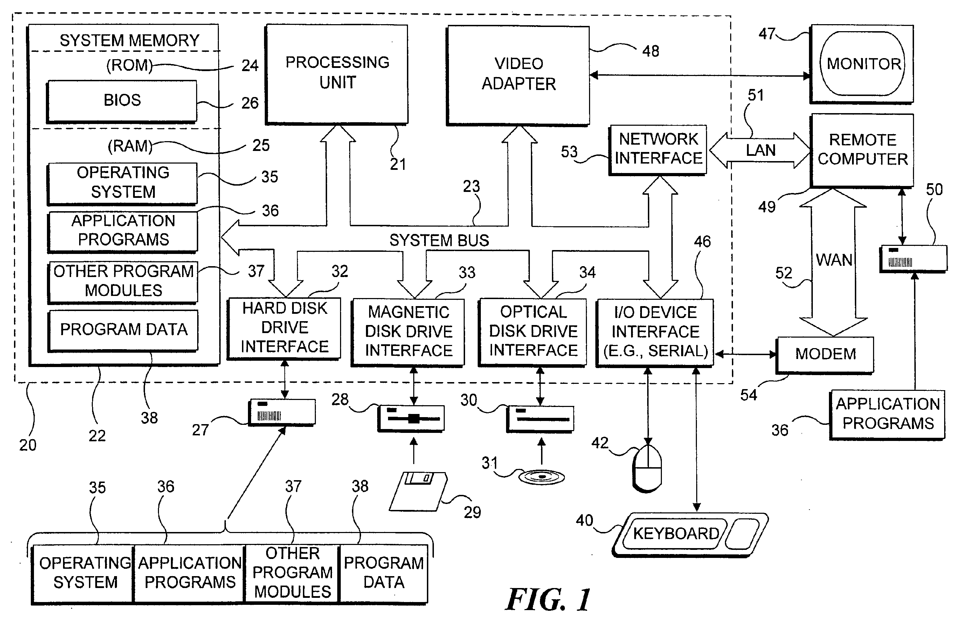

FIGURE 1 and the following discussion related thereto are intended to provide a brief, general description of a suitable computing environment in which the present invention may be implemented. This invention is preferably practiced on a single computing device functioning as a server that is coupled to a client computing device or other remote computing device by a communications network. The client computing device will also typically include the functional components shown in FIGURE 1. Although not required, the present invention is described as employing computer executable instructions, such as program modules that are executed by the server to enable localization of Web pages, and by a client computer or computing device, to render Web pages with the localization. Generally, program modules include application programs, routines, objects, components, functions, data structures, etc. that perform particular tasks or implement particular abstract data types. Also, those skilled in the art will appreciate that this invention may be practiced with other computer system configurations, particularly in regard to the client device, including handheld devices, pocket personal computing devices, digital cell phones adapted to execute application programs and to wirelessly connect to a network, other microprocessor-based or programmable consumer electronic devices, multiprocessor systems, network personal computers, minicomputers, mainframe computers, and the like. As indicated, the present invention may also be practiced in distributed computing environments, where tasks are performed by one or more servers in communication with remote processing devices that are linked through a communications network. In a distributed computing environment, program modules may be located in both local and remote memory storage devices.

With reference to FIGURE 1, an exemplary system for implementing the present invention includes a general purpose computing device in the form of a conventional server 20, provided with a processing unit 21, a system memory 22, and a system bus 23. The system bus couples various system components, including the system memory, to processing unit 21 and may be any of several types of bus structures, including a memory bus or memory controller, a peripheral bus, and a local bus using any of a variety of bus architectures. The system memory includes read only memory (ROM) 24 and random access memory (RAM) 25. A basic input/output system 26 (BIOS) containing the basic routines that help to transfer information between elements within server 20, such as during start up, is stored in ROM 24. Server 20 further includes a hard disk drive 27 for reading from and writing to a hard disk (not shown), a magnetic disk drive 28 for reading from or writing to a removable magnetic disk 29, and an optical disk drive 30 for reading from or writing to a removable optical disk 31, such as a CD-ROM or other optical media. Hard disk drive 27, magnetic disk drive 28, and optical disk drive 30 are connected to system bus 23 by a hard disk drive interface 32, a magnetic disk drive interface 33, and an optical disk drive interface 34, respectively. The drives and their associated computer readable media provide nonvolatile storage of computer readable machine instructions, data structures, program modules, and other data for server 20. Although the exemplary environment described herein employs a hard disk, removable magnetic disk 29, and removable optical disk 31, it will be appreciated by those skilled in the art that other types of computer readable media, which can store data that are accessible by a computer, such as magnetic cassettes, flash memory cards, digital video disks (DVDs), Bernoulli cartridges, RAMs, ROMs, and the like, may also be used in the exemplary operating environment.

A number of program modules may be stored on the hard disk, magnetic disk 29, optical disk 31, ROM 24 or RAM 25, including an operating system 35, one or more application programs 36, other program modules 37, and program data 38. A user may enter commands and information into server 20 through input devices such as a keyboard 40 and a pointing device 42. Other input devices (not shown) may include a microphone, joystick, game pad, satellite dish, scanner, or the like. These and other input/output (I/O) devices are often connected to processing unit 21 through an I/O interface 46 that is coupled to system bus 23. The term I/O interface is intended to encompass each interface specifically used for a serial port, a parallel port, a game port, a keyboard port, and/or a universal serial bus (USB). A monitor 47, or other type of display device, is also connected to system bus 23 via an appropriate interface, such as a video adapter 48, and is usable to display application programs, Web pages, and/or other information. In addition to the monitor, the server may be coupled to other peripheral output devices (not shown), such as speakers (through a sound card or other audio interface (not shown)) and printers.

As indicated above, many aspects of the present invention are preferably practiced on a single machine;

however, server 20 may operate in a networked environment using logical connections to one or more remote computers, such as a remote computer 49. Remote computer 49 may be another server, a client personal computer, a router, a network PC, a peer device, or a satellite or other common network node, and typically includes many or all of the elements described above in connection with server 20, although only an external memory storage device 50 has been illustrated in FIGURE 1. The logical connections depicted in FIGURE 1 include a local area network (LAN) 51 and a wide area network (WAN) 52. Such networking environments are common in offices, enterprise wide computer networks, intranets, and the Internet.

When used in a LAN networking environment, server 20 is connected to LAN 51 through a network interface or adapter 53. When used in a WAN networking environment, server 20 typically includes a modem 54, or other means such as a cable modem, Digital Subscriber Line (DSL) interface, or an Integrated Service Digital Network (ISDN) interface, for establishing communications over WAN 52, such as the Internet. Modem 54, which may be internal or external, is connected to the system bus 23 or coupled to the bus via I/O device interface 46; i.e., through a serial port. In a networked environment, program modules depicted relative to server 20, or portions thereof, may be stored in the remote memory storage device. It will be appreciated that the network connections shown are exemplary and other means of establishing a communications link between the computers may be used, such as wireless communication and wideband network links.

Exemplary Embodiment

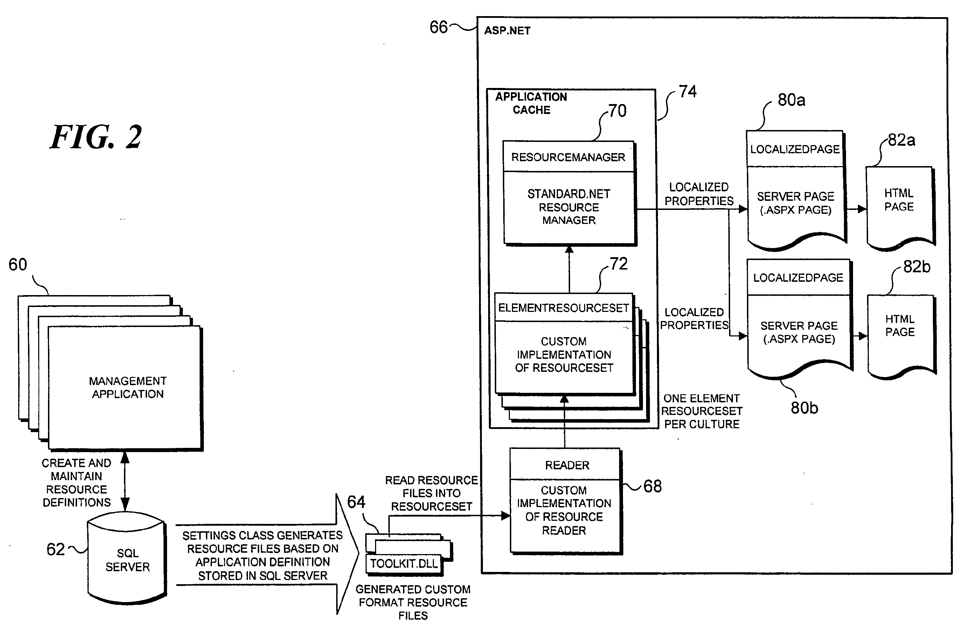

FIGURE 2 illustrates an architecture for a preferred embodiment of the present invention. A management application 60 enables a user to create and maintain definitions of localization elements for Web applications using server 20 or another personal computer. Management application 60 may be a Web application, a stand-alone software application, a tool within a design studio, or other form of software module. Preferably, management application 60 interfaces with a structured query language (SQL) database 62 (e.g., Microsoft Corporation's SQL Server™ program). Database 62 stores localization elements, culture information, Web application information, versioning information, and other data relevant to creating and maintaining resource definitions and Web applications. Database 62 further stores relationships among hypertext mark-up language (HTML) elements to be localized.

Management application 60 is also used to generate custom format resource files 64. Preferably, resource files 64 are created for storage on a Web server in a subdirectory of the management application. Resource files 64 may be loose resource files, which are uncompiled files. Alternatively, resource files 64 may be satellite assemblies, which are compiled dynamic link library (DLL) files that contain only resources. The satellite assemblies are thus loose resource files that are compiled together into separate DLLs based on culture, and which are placed in a directory structure that corresponds to a culture name. Preferably, loose resource files are constructed using a module, such as Microsoft Corporation's RESGEN.EXE. Satellite assemblies are preferably constructed using an assembly generation tool, such as Microsoft Corporation's AL.EXE.

A Web server run time program 66, such as Microsoft Corporation's current generation of active server page (ASP.NET™), utilizes resource files 64 to localize Web pages of a Web application. A resource reader 68 is used to read the specific format of resource files 64, and provide the localization information to an element resource set 72. One element resource set is established for each culture read by resource reader 68. A resource manager 70 is used by Web server run time program 66 to obtain the localization information from element resource set 72. Resource manager 70 and element resource sets 72 are preferably stored in an application cache 74 for providing faster access to the localization information.

A Web application typically comprises a plurality of server pages, such as a server page 80a and a server page 80b. The server pages can include embedded executable programs compiled from languages such as C# (C sharp), C++, and other languages. Alternatively, the server pages may include common gateway interface (CGI) script, JAVA™, or other Web languages. The server pages are derived from a localized page class, an instance of which performs localization of control properties in the server pages. During render of a server page, the instance of the localized page class iterates through the control instances of the server page to locate a key attribute associated with localized properties of the control instances. The instance of the localized page class utilizes resource manager 70 to obtain the localized properties from element resource set 72 and then sets localized values for the control instances of the server page. Further details regarding this localization process are described below. Once the localized values are set, client pages, such as HTML pages 82a and 82b, are rendered.

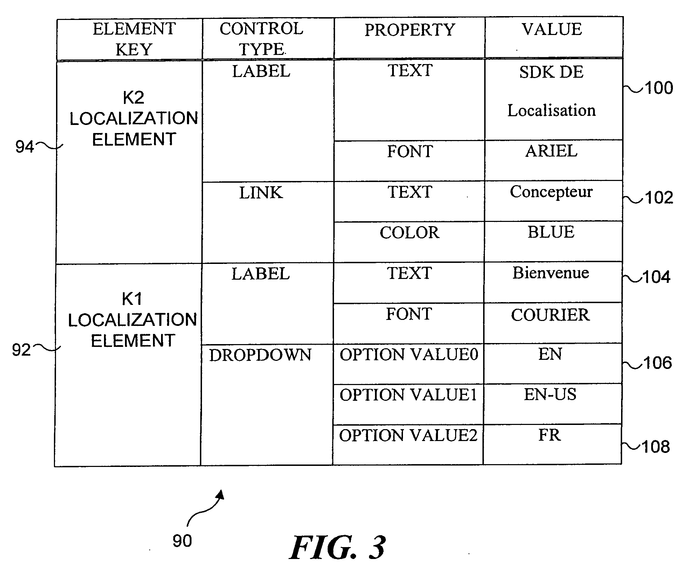

FIGURE 3 illustrates an exemplary data structure 90 of localization elements. Each localization element, such as localization elements 92 and 94, comprises a plurality of fields rather than a simple key-value pair. Preferably, the fields include a localization element key (sometimes referred to as an element key), a control type, a property, and a value. Each localization element is uniquely identified by an element key that is associated with a hybrid dictionary of control types and their properties. The element key field represents a key attribute that is added to server page control instances. The key attribute acts as a trigger to cause automatic localization of a server page control instance that includes the key attribute. For example, as discussed below, any server page control instance with a key attribute of "key" will be automatically localized. The key attribute on a server page control instance will also include an attribute value that corresponds to one of the localization element keys of data structure 90. Thus, for example, a server page control instance that includes the key attribute "key" and an attribute value of "K1" will be automatically localized with the localization information of localization element 92. In this example, the key attribute name of "key" was used, but the key attribute may be configured with any other desired name via a web.config file. In contrast, localization element key names, such as K1 and K2, are defined using the management application and stored in the database and later in the culture based resource file.

As indicated above, each localization element key is associated with a hybrid dictionary of control types. For example, localization element 94 includes a key "K2" that is associated with control types "label" and "link." The key of the hybrid dictionary is the control type name, such as "System.Web.UI.Label." The value in the name-value pair refers to another hybrid dictionary containing a plurality of properties and property values for a specified culture. For example, localization element 94 includes a control type "label," which is associated with properties "text" and "font." The property "text" is associated with a value 100 of "SDK de localisation," which is the French translation for "Localization Toolkit." The font for this label has a value equal to the string "Ariel." Similarly, localization element 94 includes a control type "link," which includes properties "text" and "color." The text property of the link control type has a value 102 for "concepteur," which is the French translation for "designer."

As can be seen in FIGURE 3, data structure 90 may include duplicate control types across localization elements. For example, localization element 92 also includes a control type "label." As with localization element 94, the label control type of localization element 92 includes text and font properties. However, the values of the text and font properties are different for localization element 92. For example, the text property value 104 is "Bienvenue," which is the French translation of "Welcome." It will also be apparent that the property values of a control type may be the same among some localization elements. Effectively, a variety of different sets of control types can be associated with multiple localization element keys. Those skilled in the art will recognize that a variety of other control types can be associated with a localization element key. For example, localization element 92 includes a "dropdown" control type, which includes a plurality of properties and associated values, such as "OptionValue0" for a value 106 and "OptionValue2" for a value 108. Buttons and other standard control types may also be used. Those skilled in the art will recognize that the above properties can be simple string values or can be complex data types. Furthermore, other data structures may be defined for skins, limited sets of user functions, or other modifications that tailor a Web application to a culture or other characteristic of a specific client user.

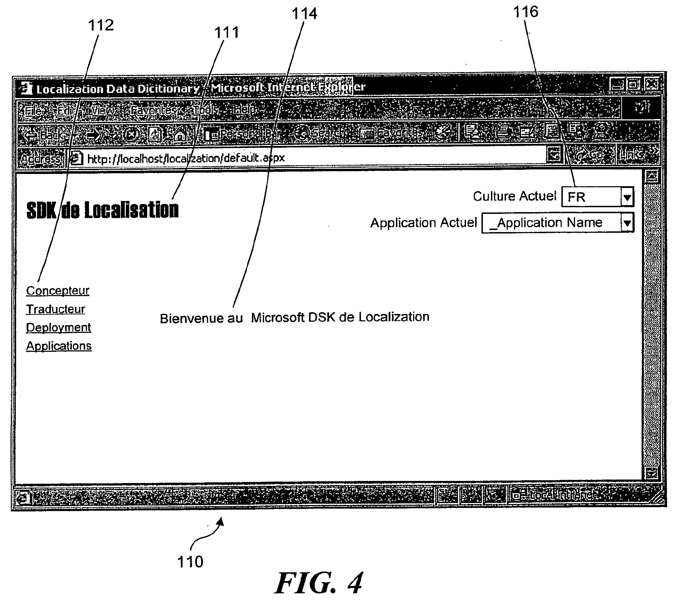

For illustration, an exemplary Web page 110 in FIGURE 4 has been localized for a client user within the French culture. Link 112 has been rendered with a localized text property value of "Concepteur" as provided by property value 102 in FIGURE 3. Similarly, label 111 of FIGURE 4 has been localized with a text property value of "SDK de Localisation" as provided by property value 100 in FIGURE 3. Label 114 of FIGURE 4 corresponds to property value 104 of FIGURE 3. Dropdown list 116 shows a currently-selected property value of "FR," corresponding to property value 108 of FIGURE 3.

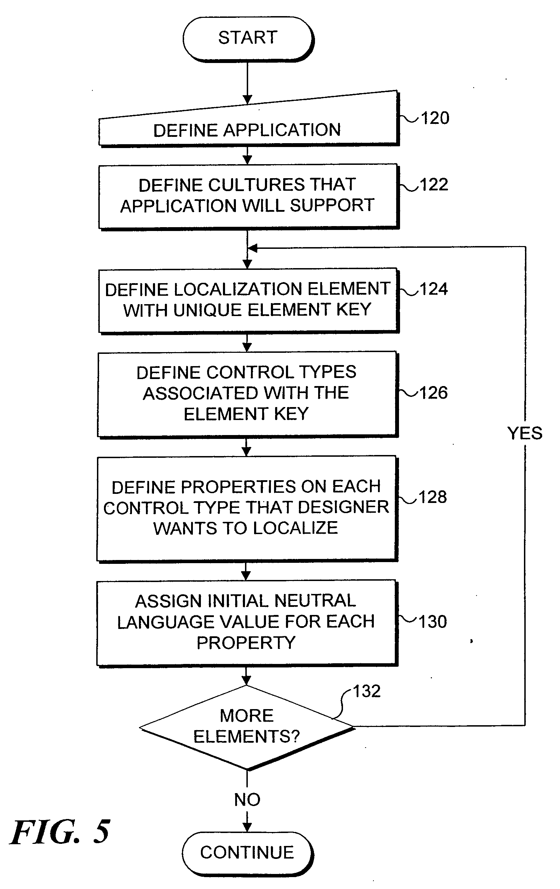

FIGURE 5 is a flow diagram illustrating logic for defining localization elements for a Web application. At a step 120, a user, such as a Web designer, defines a Web application. Defining a Web application effectively initiates a data structure such as that described above. The Web designer may use a graphical user interface that enables the Web designer to enter a Web application name, description, version, resource file base name and other information. Preferably, the Web designer also formulates a design (but not necessarily code) for server pages that comprise the Web application. At a step 122, the Web designer defines cultures that the Web application will support. Defining cultures that a Web application will support may be accomplished by another Web form of the graphical user interface through which the Web designer may enter a list of cultures for which the Web designer wishes the Web application to be localized. For example, the Web designer may enter a list of languages into which client users may wish to translate pages of the Web application. In addition, the Web designer may also define skins, filtered sets of controls, or other customization characteristics that the Web application will selectively support.

At a step 124, the Web designer defines a localization element with a unique element key. As was noted in the above steps, the Web designer may use a graphical user interface to enter an element key into a database. For each element key, at a step 126, the Web designer defines and enters one or more control types to be associated with the element key. Similarly, at a step 128, the Web designer defines and enters one or more properties for each control type that the Web designer wishes to be localized upon rendering into a client Web page. At a step 130, the Web designer assigns an initial neutral language value for each property. A neutral language value may be the designer's native language or other language the designer wishes to be the default or base language for a property. Alternate property values, such as translations into other languages, are provided at a later point in the process.

At each of the above steps the entered values are added to the localization element in the data structure stored in the database. At a decision step 132, the Web designer determines whether additional localization elements are needed. If the Web designer wishes to add additional localization elements, the Web designer repeats steps 124 through 130 for each additional localization element. Those skilled in the art will recognize that the above localization elements may be automatically established in the database via a tool for defining the Web application. Once all of the localization elements are defined, the Web designer (or other operator) may proceed with coding the server pages of the Web application.

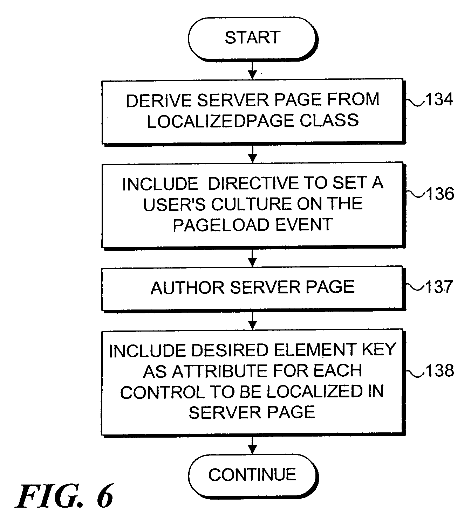

FIGURE 6 is a flow diagram illustrating logical steps for creating a Web page that will be localized upon rendering. Preferably, the Web page will be downloaded from the server, but those of ordinary skill in the art will recognize that the Web page may be accessed on the client computer, may be a control hierarchy in memory, or may comprise another form of Web page. At a step 134, the Web designer or programmer derives a page from a localized page class, called LocalizedPage. For simplicity, the page that is being created for storage on the server is referred to as the "server page." An instance of the LocalizedPage class sets control property values upon rendering the page downloaded from the server into the client computer's display at which point, the page will be referred to herein as "the client page." To accomplish this function, the instance of the LocalizedPage class overrides the standard Render method of the standard ASP.NET Page class. To instruct the ASP.NET runtime to use a unique Render method of the LocalizedPage class instead of the standard Render method of the standard .NET page class, the Web designer must insert the following directive into the page:

<%@ Page language="C#" inherits="LocalizationToolkit.LocalizedPage"          %>

At a step 136, the Web designer or programmer includes a directive to set a requesting client's culture upon the Page_Load event. For example, the Web designer may include instructions in the server page to obtain the client's culture from a culture attribute provided in the client request download of the page, or from a profile database of the client, or from a previously placed cookie accessed on the client's computer, or from a universal access account (e.g., Microsoft Corporation's Passport™ account data for the client), or from another desired source. The directive sets the culture on the thread for the client requesting download of the Web page from the server.

At a step 137, the Web designer or programmer then authors the remainder of the server page code to accomplish the desired function or functions. While authoring the server page, or after initial authoring of the server page, the Web designer or programmer inserts a key attribute and desired element key as a value of the key attribute, for each control instance in the server page that is to be localized, at a step 138.

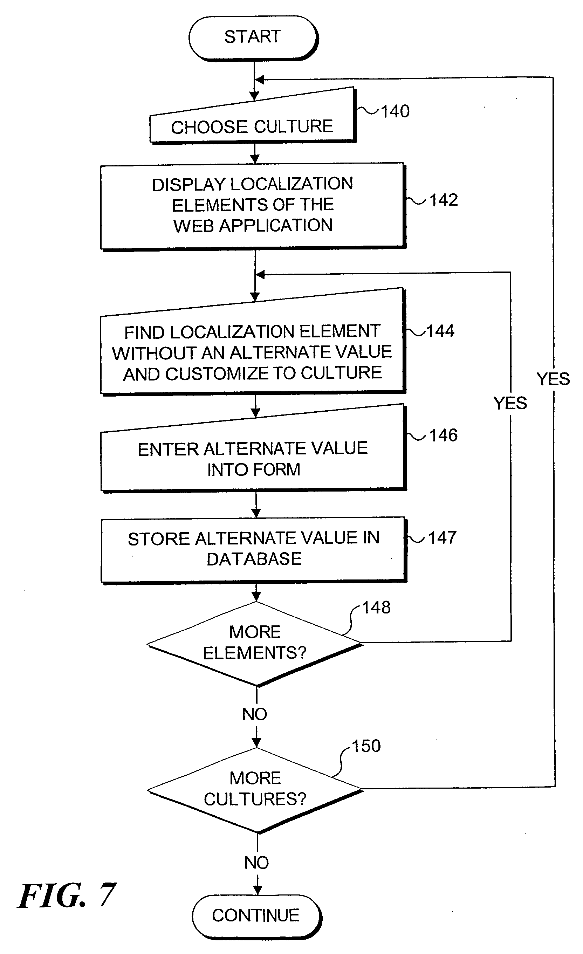

FIGURE 7 is a flow diagram illustrating logical steps for customizing localization elements that reflect a chosen culture for a selected Web application. As indicated above, each property of a localization element is assigned a neutral language value. Customizing a localization element involves providing an alternate value for each property based on the selected criteria, such as the culture. Customizing may include manually entering alternate custom values, automatically converting the neutral values, or causing another operation to provide localized alternate values. After selecting a Web application through a graphical user interface (GUI), a user of the GUI chooses, at a step 140, a culture for which the user will customize property values of the Web application. At a step 142, the user selects a link for customizing, which displays the localization elements of the Web application. The user then reviews the localization elements to find properties that do not have alternate property values for the chosen culture. At a step 144, the user selects a link of the graphical user interface to edit a localization element that does not include an alternate value for the chosen culture. At a step 146, the user enters the alternate property value through a Web form of the graphical user interface. In the present example, the alternate property value is a word or words in the language of the culture chosen at step 140. At a step 147, the graphical user interface stores the alternate property value in the database.

At a decision step 148, the user determines whether more localization elements require alternate values to be entered for the selected Web application. If another localization element requires an alternate value, the logic returns to step 144, where another localization element is entered. If there are no more alternate values to be entered for the selected culture, a decision is made, at a decision step 150, whether to enter more alternate values corresponding to a different culture. This may be possible if the use is multilingual, for example. If alternate values can be entered for a different culture, the logic returns to step 140 for the user to choose another culture. Once the alternate values for the localization elements have been entered for all of the cultures that the Web designer determined should be supported by the Web application, the database of localization elements are ready for use in generating resource files. Those skilled in the art will recognize that the customization steps may be automated and/or assisted using online and offline language and translation dictionaries, and other sources of alternate values.

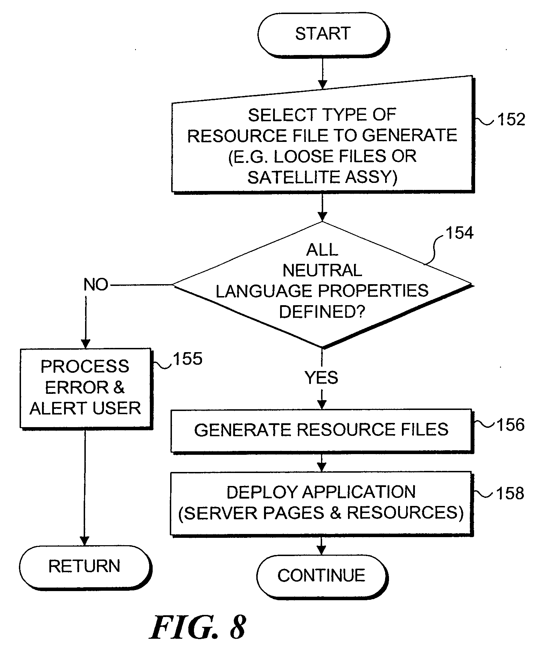

FIGURE 8 is a flow diagram illustrating logic for deploying a Web application and its associated resource files after all pages of the Web application are coded and all localization elements are customized. At a step 152, the user selects a type of resource file to generate. Preferably, the user simply presses one of two buttons through the graphical user interface. One button corresponds to generating a loose resource file, while the other button corresponds to generating a satellite assembly. Pressing the button to generate a loose resource file activates a GenerateResourceFiles method of a Settings class. Alternatively, pressing the button to generate a satellite assembly activates a GenerateSatellites method of the Settings class. Besides these methods, the Settings class comprises methods for accessing configuration settings (such as the web.config file), loading dropdown lists with available cultures and applications, and other helper functions.

At a decision step 154, the chosen generation method checks each property of each localization element to ensure that each property has at least a neutral or base language defined. If a neutral language is not defined, then the control instance associated with the undefined property cannot be rendered. Thus, if one of the properties does not have at least a neutral language defined, there is no sense in proceeding to generate a resource file of any kind, because an error will inevitably occur during rendering. Therefore, if all properties are not defined with a neutral or base language, an error will be processed and the user is alerted of the error at a step 155. Those of ordinary skill in the art will recognize that other checks or validations may be performed before generating a resource file.

If a neutral or base language is defined for each property, the method chosen above generates the appropriate resource files, at a step 156. Preferably, the GenerateResourceFiles method utilizes the RESGEN.EXE tool from the .NET™ framework along with a unique Writer method of a Writer class. The Writer method is a customized implementation of the standard .NET™ ResourceWriter method, which writes a loose resource file with a format that reflects the extended control types, properties, and values of a localization element described above with regard to FIGURE 3. Similarly, the GenerateSatellites method utilizes the AL.EXE tool from the .NET™ framework to generate compiled satellite assemblies from the loose resource files generated by the GenerateResourceFiles method. During generation, subdirectories are created for storing the resource files on the server. Once the resource files are generated and stored in the appropriate subdirectories, the user deploys the resource files and Web application pages at a step 158, enabling client computers to access the Web application pages over a network.

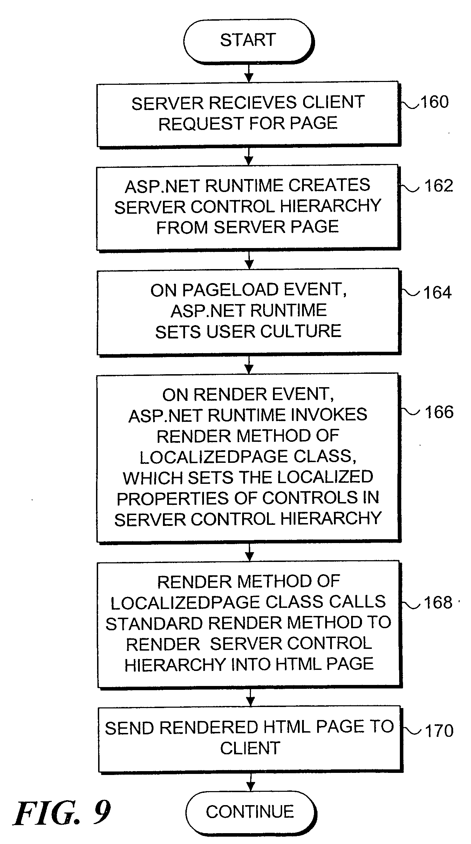

FIGURE 9 is a flow diagram illustrating overview logic for localizing and rendering a requested server page to a client computer. At a step 160, the server receives a client request for a particular server page. Preferably, the server's Internet Information Server (IIS) software passes the requested server page file name to the ASP.NET™ runtime program (e.g., the .NET™ common language runtime (CLR) module). Preferably utilizing the web.config file to locate the server page and for other settings, the ASP.NET™ runtime program loads a server control hierarchy into memory based on the server page, at a step 162 (typically as a result of an OnInit event). On a PageLoad event, the ASP.NET™ runtime then obtains and sets the requesting client's culture for the sever control hierarchy, at a step 164.

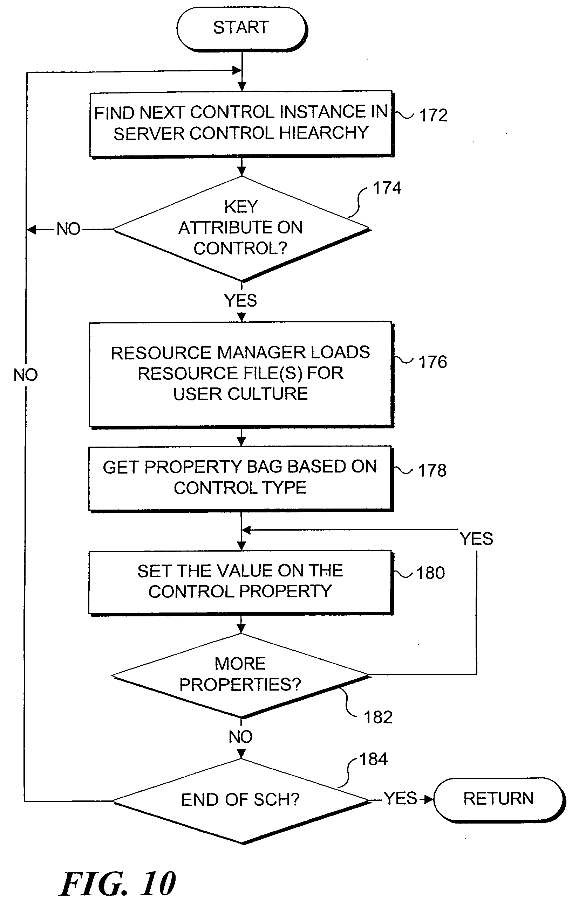

On a Render event, the ASP.NET runtime checks a virtual table to determine that an instance of the LocalizedPage class is to be called instead of an instance of the standard Page class. The virtual table is typically set at compile time or at initial runtime based on the @Page directive discussed above. At a step 166, the ASP.NET™ runtime invokes a unique Render method of the LocalizedPage class to set the values of localized properties for control instances in the sever control hierarchy. Further detail of this step is discussed below with regard to FIGURE 10. Once the server control hierarchy has been localized, the unique Render method of the LocalizedPage class invokes the standard Render method of the Page class at a step 168. The standard Render method then utilizes an instance of a standard TextWriter class to render the server control hierarchy into the desired markup language, such as HTML, XML, SGML, or other language. (As used in this context, the term "render" means to convert rather than to create a display of the Web page.) At a step 170, the server sends the rendered page to the client and continues processing. At the client computer, a browser program, such as Microsoft Corporation's Internet Explorer™ executes the markup language of the page received from the server to display the Web page at the client computer. The displayed Web page will thus include the localization appropriate for the client.

Note that, as indicated above, the whole invention could instead be practiced on a single machine. Thus, the Web page could be localized and rendered on the server, then displayed at the server, rather than being sent to the client. Those skilled in the art will recognize that the same general steps apply to customizing a user interface appearance with a skin having a particular design and/or color theme, limiting a set of controls available to a user as a function of the experience or needs of the user, providing specific controls or data to the user according to a business rule, providing culture based validation of data entered into a Web form, and other modifications that tailor the software to a specific user.

FIGURE 10 is a flow diagram illustrating detailed logic for localizing a server page. At a step 172, the unique Render method of the LocalizedPage class performs a depth-first search on the control instances of the server control hierarchy to detect a control instance to localize. Specifically, the unique Render method determines whether a control instance is derived from System.Web.UI.WebControls or System.Web.UI.HtmlControls. This step also determines the control type of the control instance. Once a qualifying control instance is detected, the unique Render method evaluates the control instance's Attributes collection, at a decision step 174, to determine whether the control instance includes a predefined key attribute (e.g., the attribute with the name defined in the web.config file). If the control instance does not include the key attribute, the unique Render method returns to step 172 to search for another control instance. If no further control instances exist in the server control hierarchy, the unique Render method will end the detailed localization process.

When the unique Render method detects a key attribute on a control instance, the unique Render method determines the value associated with the key attribute on the control instance. The key attribute value for the current control instance will be a localization element key, such as K1 or K2, as defined in FIGURE 3. The unique Render method then makes the key attribute value available to an instance of a ResourceManager class.

At a step 176, the unique Render method looks for the current instance of the standard .NET™ ResourceManager class to invoke. The instance of the ResourceManager class is instantiated during the OnInit event of the Web application. The instance of the ResourceManager class is then cached as an application variable that is configurable through the web.config file. By caching the instance of the ResourceManager class, it can be shared among all server pages of the Web application, rather than creating a separate instance of the ResourceManager class for every server page in the Web application. Thus, the unique Render method first checks for an existing instance of the ResourceManager class. If the unique Render method does not know which instance of the ResourceManager class is currently associated with the server control hierarchy, the instance of the LocalizedPage class (from which the unique Render method is derived) uses a globally available method, Settings.CurrentManager, to determine the current instance of the ResourceManager class. The first time the Settings.CurrentManager method is called, it creates a shared instance of the ResourceManager class and places it into the ASP.NET™ cache under the default variable name LocalizedToolkitResourceManager. The variable name is configurable via the web.config file.

Once identified, the instance of the ResourceManager class finds the resource files (loose files or satellite assembly DLLs, depending on a configuration setting in the web.config file) appropriate for the client's culture and the Web application to which the requested server page belongs. To load the appropriate resource files, the instance of the ResourceManager class invokes an instance of an ElementResourceSet class. The instance of the ElementResourceSet class is a custom implementation of the standard .NET™ ResourceSet class. The instance of the ElementResourceSet class utilizes a custom Reader method (and a custom Writer method) to access the specific formatted resource files associated with the requesting client's culture and the Web application to which the requested server page belongs. For example, the resource file for a particular culture can be loaded into memory as an ElementResourceset with the following C# statement:

ElementResourceSet rs =

Settings.CurrentManager.GetResourceSet(Thread.CurrentThread.CurrentUICultu

re, true, true)

as ElementResourceSet;

The instance of the ElementResourceSet class also utilizes a hash table to hold key-value pairs comprising a localization element key and a reference to an instance of a LocalizationElement class. Unlike for the standard ResourceSet class, the value in the hash table key-value pair is not a simple string, but is instead an object corresponding to a LocalizationElement class. It is the LocalizationElement class that comprises the HybridDictionary of control types and their properties. From the resource file retrieved based on the client's culture, the instance of the LocalizationElement class obtains a HybridDictionary of one or more properties and associated values (sometimes referred to as a property bag), at a step 178. The property bag is obtained based on the key attribute value and the type of the control instance identified in the server control hierarchy. Preferably, the instance of the LocalizationElement class uses a service of a SetProperties method of the LocalizationElement class to obtain the property bag (the HybridDictionary) of properties and values associated with the control type of the identified control instance. To access the correct control type in the resource file, the instance of the LocalizationElement class uses a separate control key. Specifically, the control key is the control type name, such as System.Web.UI.Label, corresponding to a label type of control instance in the server control hierarchy.

The value corresponding to the control key refers to another HybridDictionary. This second HybridDictionary contains the property names and values associated with the client's culture and associated with the specified type of control. The instance of the LocalizationElement class preferably uses the SetProperties method to set all the localized properties defined for this control instance. For example, the localized property values for a control can be set using the following C# statements:

LocalizationElement e = Settings.CurrentManager.GetObject(key) as LocalizationElement;

```
if (null != e)
{
        e.SetProperties(w);
        w.Attributes.Remove(Settings.KeyName);   // Remove the key to prevent
rendering HTML
}.
```

With the value information, at a step 180, the instance of the LocalizationElement class then preferably uses a SetProperties method to set the properties of the control instance in the server control hierarchy. The SetProperties method utilizes a .NET reflection service to set the properties to their defined values. Reflection provides objects that encapsulate assemblies, modules, and types. Reflection can be used to dynamically create an instance of a type, bind the type to an existing object, or get the type from an existing object. As a specific example, the SetProperties method can be implemented using the following C# statements for string based resources (the method can be extended to allow use of complex data types):

```
public void SetProperties(Control control)
{
        Type controlType = control.GetType();
        HybridDictionary properties = _controlTypes[controlType.FullName] as
HybridDictionary;
        if (null != properties)
        {
                // Get all the property descriptors for this control. This should already be
cached by
                the framework
                PropertyDescriptorCollection propDescs =
                        TypeDescriptor.GetProperties(controlType);


                // Get an enumerator for the set of localized properties
                IDictionaryEnumerator pEnum = properties.GetEnumerator();
                while(pEnum.MoveNext())
                {
                        PropertyDescriptor pd = propDescs[pEnum.Key.ToString()];
                        if (null != pd)

                pd.SetValue(control,TypeDescriptor.GetConverter(pd.PropertyType).ConvertFrom(pEnum.Val
ue));
                }
        }
}
```

Thus, the instance of the LocalizationElement class manages the relationships between the various control type properties and a localization element key. The instance of the LocalizationElement class is able to bundle all the properties associated with a particular localization element key into one ResourceManager call, which enables one localization element key to be associated with multiple properties. Properties are further bundled by control type, allowing different control types to share the same localization element key. All of this automatic setting of the control instance's properties avoids the need to write initialization code that must otherwise be written for carrying out the Page_Load event for the server page. Although the use of resource files in memory provides faster access, the control types, properties, and values can be accessed directly from the database. For example, a new instance of the ResourceManager class could access the database, instead of a resource file. This feature may be useful if the data in the database change frequently and the most current data are desired.

At a decision step 182, the instance of the LocalizationElement class determines whether there are more properties to be set for the control type. If there are more properties to be set for the control type, the instance of the LocalizationElement class repeats step 180. Once all of the properties are set for the control type, at a decision step 184, the unique Render method determines whether the end of the server control hierarchy (SCH) has been reached. If not, the unique Render method returns to step 172 to check for another control instance. Once the end of the server control hierarchy has been reached, detailed localization of the server control hierarchy is complete and the localization is ready to be rendered into a markup language appropriate for the client requesting the Web page.

Although the present invention has been described in connection with a preferred form of practicing it and modifications thereto, those of ordinary skill in the art will understand that many other modifications can be made thereto within the scope of the claims that follow. For example, the above method could be applied to personal productivity tools, such as office application software, to localize controls in XML versions of personal productivity documents. An alternative client-based embodiment could cause resource files corresponding to the client's culture to be downloaded to the client device and the client operating system or local program could perform the localization to render the Web page into the markup language for display by a browser running on the client computer. Mobile client devices can utilize a mobile controls software developer's kit (SDK) to implement the invention. Accordingly, it is not intended that the scope of the invention in any way be limited by the above description, but instead be determined entirely by reference to the claims that follow.

**Claims**

1. A method of localizing a Web page based on a selected characteristic, comprising the steps of:

   (a) associating a key with at least one control type, each control type being associated with at least one stored property, and each stored property being associated with a stored value that represents the stored property in accord with the selected characteristic;
   (b) detecting whether the key has been applied as an attribute for any instance of the control type with which the key is associated in the Web page;
   (c) obtaining each stored property and the stored value associated with the stored property for each instance of each control type detected in step (b) as a function of the key and the selected characteristic; and
   (d) for each instance of the control type detected in step (b), setting a value on each property of the instance of the control type, so that the property of the instance of the control type has the stored value for said stored property obtained in step (c).

2. The method of Claim 1, wherein the Web page comprises one of a server page, a client page, and control data for a page that are in a memory.

3. The method of Claim 1, wherein the characteristic comprises at least one of a culture, a language, a location, an appearance, a skin, a business rule, and a validation.

4. The method of Claim 1, wherein the key comprises a configurable identifier identifying a localization element comprising:

   (a) the at least one control type;
   (b) each stored property associated with each control type; and
   (c) each stored value associated with each stored property.

5. The method of Claim 4, wherein the localization element comprises a data structure stored in one of a database, a loose resource file, a compiled data file, an XML file, and a text based file.

6. The method of Claim 1, wherein the step of associating the key comprises the steps of:

    (a) converting the stored value associated with the at least one stored property into a alternate value that conforms to the selected characteristic; and
    (b) generating a resource file including the alternate value associated with the key.

7. The method of Claim 1, wherein the at least one control type comprises at least one markup language control.

8. The method of Claim 1, further comprising the step of rendering the Web page when the Web page is requested for display, and wherein the step of detecting whether the key has been applied comprises the steps of:

    (a) recognizing the instance of the at least one control type during the step of rendering the Web page; and
    (b) determining that the instance includes an attribute that identifies the key.

9. The method of Claim 1, wherein the step of obtaining each stored property and stored value associated with the stored property, comprises the steps of:

    (a) detecting the key in a resource file; and
    (b) reading each stored property associated with the key and the stored value associated with said stored property in the resource file.

10. The method of Claim 1, wherein the step of setting the value comprises the step of assigning each stored property and the stored value associated with the stored property to the instance of each control type at the location of the key.

11. The method of Claim 10, wherein the step of assigning is performed using a customized page class render method.

12. The method of Claim 1, further comprising the step of rendering into a markup language the instance of each control type with the value of each property associated with the control type.

13. The method of Claim 12, wherein the step of rendering creates localized markup data in accord with the desired characteristic, said localized markup data being readable by a Web page browser program.

14. A machine-readable medium storing machine instructions that cause a processor to perform the steps of Claim 1.

15. A system for localizing a Web page based on a selected characteristic, comprising:

    (a) a processor; and
    (b) a memory in communication with the processor in which are stored machine instructions that when executed by the processor, cause the processor to:

        (i) associate a key with at least one control type, each control type being associated with at least one stored property, and each stored property being associated with a stored value that represents the stored property in accord with the selected characteristic;
        (ii) detect whether the key has been applied as an attribute for any instance of the control type with which the key is associated in the Web page;
        (iii) obtain each stored property and the stored value associated with the stored property for each instance of each control type detected as a function of the key and the selected characteristic; and
        (iv) for each instance of the control type detected, set a value on each property of the instance of the control type, so that the property of the instance of the control type has the stored value for said stored property that was obtained.

16. The system of Claim 15, wherein the key comprises a configurable identifier identifying a localization element comprising:

    (a) the at least one control type;

(b) each stored property associated with each control type; and
(c) each stored value associated with each stored property.

17. The system of Claim 16, wherein the localization element comprises a data structure stored in one of a database, a loose resource file, and a compiled data file.

18. The system of Claim 15, wherein the machine instructions that cause the processor to associate the key, cause the processor to:

(a) convert the stored value associated with the at least one stored property into a alternate value that conforms to the selected characteristic; and
(b) generate a resource file including the alternate value associated with the key.

19. The system of Claim 15, wherein the at least one control type comprises at least one markup language control.

20. The system of Claim 15, wherein the machine instructions further cause the processor to render the Web page when the Web page is requested for display, and wherein the machine instructions that cause the processor to detect the key, cause the processor to:

(a) recognize the instance of the at least one control type upon rendering of the Web page; and
(b) determine that the instance includes an attribute that identifies the key.

21. The system of Claim 15, wherein the machine instructions that cause the processor to obtain each stored property and stored value associated with the stored property, cause the processor to:

(a) detect the key in a resource file; and
(b) read each stored property associated with the key and the stored value associated with said stored property in the resource file.

22. The system of Claim 15, wherein the machine instructions that cause the processor to set the value, cause the processor to assign each stored property and the stored value associated with the stored property to the instance of each control type at the location of the key.

23. The system of Claim 22, wherein the machine instructions that cause the processor to assign each stored property are instructions of a customized page class render method.

24. The system of Claim 15, wherein the machine instructions further cause the processor to render into a markup language the instance of each control type with the value of each property associated with the control type.

25. A machine-readable medium having stored thereon a data structure for a localization element, comprising:

(a) an element key;
(b) at least one control type associated with the element key;
(c) at least one property associated with each control type; and
(d) a value associated with each property.

26. A method for enabling a user to generate localization element resource data for a Web application, comprising the steps of:

(a) enabling the user to specify at least one characteristic that the Web application will support;
(b) enabling the user to define at least one localization element, each localization element comprising:

(i) a unique key;
(ii) at least one control type associated with the unique key;
(iii) at least one property associated with each control type; and
(iv) a value associated with each property;

(c) enabling the user to define each value for each property in step (b) to conform to a characteristic that is specified in step (a); and

(d) enabling the user to generate one of an uncompiled resource and a compiled resource from said at least one localization element, based upon each characteristic that is specified in step (a).

**27.** The method of Claim 26, wherein the at least one characteristic comprises one of a culture, a language, a location, an appearance, a skin, a business rule, and a validation.

**28.** The method of Claim 26, wherein the step of enabling the user to specify at least one characteristic comprises the step of providing a graphical user interface for accessing a data store, said graphical user interface enabling the user to implement at least one of the steps of:

(a) entering the at least one characteristic into the data store; and
(b) selecting the at least one characteristic from optional characteristics accessed in the data store.

**29.** The method of Claim 26, wherein the step of enabling the user to define a localization element comprises the step of employing a graphical user interface that enables the user to indicate:

(a) a unique key;
(b) at least one control type associated with the unique key;
(c) at least one property associated with each control type; and
(d) a value associated with each property.

**30.** The method of Claim 26, wherein the step of enabling the user to generate one of an uncompiled resource and a compiled resource comprises the step of providing a graphical user interface for accessing a data store that stores each localization element and for accessing one of an uncompiled resource generator and a compiled resource generator.

**31.** The method of Claim 30, further comprising the steps of:

(a) generating an uncompiled resource comprising any localization elements associated with each one characteristic, if the uncompiled resource generator is accessed by the user through the graphical user interface; and
(b) generating a compiled resource based on at least one uncompiled resource, if the compiled resource generator is accessed by the user through the graphical user interface.

**32.** A machine-readable medium storing machine instructions that cause a processor to perform the steps of Claim 26.

**33.** A system for enabling a user to generate a localization element resource for a Web application, comprising:

(a) a processor;
(b) an input device in communication with the processor;
(c) a display device in communication with the processor; and
(d) a memory in communication with the processor, said memory storing machine instructions that when executed by the processor, cause the processor to:

(i) enable the user to specify through the input device at least one characteristic that the Web application will support;
(ii) enable the user to define through the input device at least one localization element, each localization element comprising:

(1) a unique key;
(2) at least one control type associated with the unique key;
(3) at least one property associated with each control type; and
(4) a value associated with each property;

(iii) enable the user to define through the input device each value for each property to conform to a characteristic specified by the user; and
(iv) enable the user to generate through the input device one of an uncompiled resource and a compiled resource from said at least one localization element, based upon each characteristic that is specified by the user.

34. The system of Claim 33, wherein the machine instructions that cause the processor to enable the user to specify through the input device at least one characteristic, cause the processor to enable the user to specify through the input device one of a culture, a language, a location, an appearance, a skin, a business rule, and a validation.

35. The system of Claim 33, wherein the machine instructions that cause the processor to enable the user to specify through the input device at least one characteristic, cause the processor to provide a graphical user interface using the display device, for accessing a data store, said machine instructions that cause the processor to provide a graphical user interface causing the processor to enable the user to do one of:

   (a) enter through the input device the at least one characteristic into the data store; and
   (b) select through the input device the at least one characteristic from optional characteristics accessed in the data store.

36. The system of Claim 33, wherein the machine instructions that cause the processor to enable the user to define through the input device at least one localization element, cause the processor to provide a graphical user interface through the display device that enables the user to indicate through the input device:

   (a) a unique key;
   (b) at least one control type associated with the unique key;
   (c) at least one property associated with each control type; and
   (d) a value associated with each property.

37. The system of Claim 33, wherein the machine instructions that cause the processor to enable the user to generate through the input device one of an uncompiled resource and a compiled resource, cause the processor to provide a graphical user interface through the display for accessing a data store that stores each localization element and for accessing one of an uncompiled resource generator and a compiled resource generator.

38. The system of Claim 33, further comprising machine instructions that cause the processor to:

   (a) generate an uncompiled resource comprising any localization elements associated with each one characteristic, if the uncompiled resource generator is accessed by the user through the graphical user interface; and
   (b) generate a compiled resource based on at least one uncompiled resource, if the compiled resource generator is accessed by the user through the graphical user interface.

*FIG. 1*

# FIG. 2

EP 1 302 867 A2

| ELEMENT KEY | CONTROL TYPE | PROPERTY | VALUE | |
|---|---|---|---|---|
| K2 LOCALIZATION ELEMENT | LABEL | TEXT | SDK DE Localisation | ~100 |
| | | FONT | ARIEL | |
| | LINK | TEXT | Concepteur | ~102 |
| | | COLOR | BLUE | |
| K1 LOCALIZATION ELEMENT | LABEL | TEXT | Bienvenue | ~104 |
| | | FONT | COURIER | |
| | DROPDOWN | OPTION VALUE0 | EN | ~106 |
| | | OPTION VALUE1 | EN-US | |
| | | OPTION VALUE2 | FR | ~108 |

94 ~ (K2 row)
92 ~ (K1 row)
90

**FIG. 3**

112    111    114    116

Localization Data Dicitionary - Microsoft Internet Explorer

File   Edit   View   Favorites   Tools   Help

Back   Personal Bar   Search   Favorites

Address   http://localhost/localization/default.aspx

Culture Actuel   FR

Application Actuel   _Application Name

**SDK de Localisation**

Concepteur

Traducteur

Bienvenue au  Microsoft DSK de Localization

Deployment

Applications

110

*FIG. 4*

```
                    ┌─────────────┐
                    │    START    │
                    └─────────────┘
                           │
                           ▼
        ┌──────────────────────────────┐
        │      DEFINE APPLICATION       │────120
        └──────────────────────────────┘
                           │
                           ▼
        ┌──────────────────────────────┐
        │     DEFINE CULTURES THAT      │────122
        │   APPLICATION WILL SUPPORT    │
        └──────────────────────────────┘
                           │
                           ▼
        ┌──────────────────────────────┐
        │ DEFINE LOCALIZATION ELEMENT   │────124
        │   WITH UNIQUE ELEMENT KEY     │
        └──────────────────────────────┘
                           │
                           ▼
        ┌──────────────────────────────┐
        │     DEFINE CONTROL TYPES      │
        │     ASSOCIATED WITH THE       │────126
        │         ELEMENT KEY           │
        └──────────────────────────────┘
                           │
                           ▼
        ┌──────────────────────────────┐
        │  DEFINE PROPERTIES ON EACH    │
        │ CONTROL TYPE THAT DESIGNER    │────128
        │     WANTS TO LOCALIZE         │
        └──────────────────────────────┘
                           │
                           ▼
        ┌──────────────────────────────┐
        │    ASSIGN INITIAL NEUTRAL     │
        │  LANGUAGE VALUE FOR EACH      │────130
        │         PROPERTY              │
        └──────────────────────────────┘
                           │
                           ▼
                      ╱─────────╲
                     ╱   MORE    ╲────132      YES
                     ╲ ELEMENTS? ╱
                      ╲─────────╱
                           │
                          NO
                           │
                           ▼
                    ┌─────────────┐
                    │  CONTINUE   │
                    └─────────────┘
```

*FIG. 5*

```
        ┌─────────────┐
        │    START    │
        └─────────────┘
               │
               ▼
  ┌──────────────────────────┐
  │ DERIVE SERVER PAGE FROM  │  ∿134
  │  LOCALIZEDPAGE CLASS     │
  └──────────────────────────┘
               │
               ▼
  ┌──────────────────────────┐
  │ INCLUDE DIRECTIVE TO SET A│  ∿136
  │   USER'S CULTURE ON THE   │
  │    PAGELOAD EVENT         │
  └──────────────────────────┘
               │
               ▼
  ┌──────────────────────────┐
  │   AUTHOR SERVER PAGE     │  ∿137
  └──────────────────────────┘
               │
               ▼
  ┌──────────────────────────┐
  │ INCLUDE DESIRED ELEMENT KEY│  ∿138
  │    AS ATTRIBUTE FOR EACH   │
  │ CONTROL TO BE LOCALIZED IN │
  │      SERVER PAGE          │
  └──────────────────────────┘
               │
               ▼
        ┌─────────────┐
        │   CONTINUE  │
        └─────────────┘
```

*FIG. 6*

START

CHOOSE CULTURE ~140

DISPLAY LOCALIZATION
ELEMENTS OF THE
WEB APPLICATION ~142

FIND LOCALIZATION ELEMENT
WITHOUT AN ALTERNATE VALUE
AND CUSTOMIZE TO CULTURE ~144

ENTER ALTERNATE VALUE
INTO FORM ~146

STORE ALTERNATE VALUE IN
DATABASE ~147

MORE
ELEMENTS? 148

YES

YES

NO

MORE
CULTURES? 150

NO

CONTINUE

*FIG. 7*

EP 1 302 867 A2

START

SELECT TYPE OF
RESOURCE FILE TO GENERATE
(E.G. LOOSE FILES OR
SATELLITE ASSY) ⟋152

ALL
NEUTRAL
LANGUAGE PROPERTIES
DEFINED? ⟋154

NO

PROCESS
ERROR &
ALERT USER ⟋155

YES

GENERATE RESOURCE FILES ⟋156

DEPLOY APPLICATION
(SERVER PAGES & RESOURCES) ⟋158

RETURN

CONTINUE

*FIG. 8*

START

SERVER RECIEVES CLIENT REQUEST FOR PAGE ⌇160

ASP.NET RUNTIME CREATES SERVER CONTROL HIERARCHY FROM SERVER PAGE ⌇162

ON PAGELOAD EVENT, ASP.NET RUNTIME SETS USER CULTURE ⌇164

ON RENDER EVENT, ASP.NET RUNTIME INVOKES RENDER METHOD OF LOCALIZEDPAGE CLASS, WHICH SETS THE LOCALIZED PROPERTIES OF CONTROLS IN SERVER CONTROL HIERARCHY ⌇166

RENDER METHOD OF LOCALIZEDPAGE CLASS CALLS STANDARD RENDER METHOD TO RENDER SERVER CONTROL HIERARCHY INTO HTML PAGE ⌇168

SEND RENDERED HTML PAGE TO CLIENT ⌇170

*FIG. 9*

CONTINUE

START

FIND NEXT CONTROL INSTANCE IN SERVER CONTROL HIEARCHY ～172

KEY ATTRIBUTE ON CONTROL? 174

NO

YES

RESOURCE MANAGER LOADS RESOURCE FILE(S) FOR USER CULTURE ～176

GET PROPERTY BAG BASED ON CONTROL TYPE ～178

YES

SET THE VALUE ON THE CONTROL PROPERTY ～180

NO

MORE PROPERTIES? 182

YES

NO

END OF SCH? 184 —YES→ RETURN

*FIG. 10*